# EUROPEAN PATENT APPLICATION

(11) **EP 1 398 703 A2**
(43) Date of publication of application: **17.03.2004**
(21) Application number: 03077822.9
(22) Date of filing: 08.09.2003
(51) Int. Cl.: G06F 11/36

(54) **Method of rapidly prototyping software**

(30) Priority: 10.09.2002 US 409550 P
(71) Applicant: Accurate Technologies Inc., Wixom, Michigan 48393 (US)
(72) Inventor: Correa, Colt R., Commerce, MI 48390 (US); Balasubramaniam, Ramesh, Farmington Hills, MI 48335 (US)
(74) Representative: Plougmann & Vingtoft A/S

(57) **Abstract**

A method is provided for prototyping, testing, stimulating and verifying software embedded in a microprocessor without modifications to the underlying source code. The method includes the steps of:
(a) presenting a software program having a plurality of machine instructions of a finite number of fixed lengths in an executable form;
(b) searching through the machine instructions of the executable form and finding at least one appropriate instruction to replace; and
(c) defining a replacement instruction for identified machine instructions in the software program; and
(d) replacing identified machine instructions in the executable form of the software program with the replacement instruction.

The replacement instruction may be further defined as a branch instruction that references an address outside an address space for the software program.

## Description

### Field of the invention

The present invention relates to methods of prototyping application software; in particular, but not exclusively, the present invention relates to a method of rapidly prototyping software to be executed in conjunction with traditional embedded software in a microprocessor without modifications to underlying corresponding software code.

### Background of the invention

In modern automotive electronic control units for vehicles, there exist several embedded control algorithms that control different aspects of the vehicles. For instance, there may be an algorithm that controls an amount of fuel injected into cylinders of the vehicles and a different control algorithm that is responsible for shifting gears in the transmission of the vehicles. Traditionally, if changes needed to be made to an algorithm in such an automotive application, a controls engineer would specify the modifications to the algorithm and then give a corresponding specification to a software engineer who would write prototype software in accordance with the specification. The control engineer would then test the new algorithm. This process may need to be repeated numerous times before the algorithm is finalized.

More recently, rapid prototyping methods have been used to develop and/or modify control algorithms. Rapid prototyping is a technique of replacing a calculation or feature that runs at a different location in the processor or on an external processor. A necessary condition of this technique is to write "hooks" into base software residing in such electronic control unit. In other words, this technique requires at least some modifications to corresponding underlying source code. Therefore, it is desirable to provide a technique for prototype software embedded in a microprocessor without modifications to the underlying source code.

During the process of developing an embedded control system, it is often necessary to test and verify that software running in the embedded system meets required specifications. Such a process of testing and verification traditionally takes several forms including testing the embedded system in a physical environment for which it is intended. Another common form of testing and verification is to connect the embedded controller to a hardware simulator. The hardware simulator stimulates physical units of the controller and monitors the controller's output for correctness in accordance with the specification.

Therefore, it is also desirable to provide a technique for simulating an embedded controller and algorithms in the embedded controller without there being a need to provide physical stimulation to the embedded controller.

### Summary of the invention

A first object of the present invention is to provide a method of rapidly prototyping software.

A second object of the invention is to provide a technique for simulating an embedded controller and algorithms in the controller without there being a need to provide physical stimulation to the embedded controller.

According to a first aspect of the present invention, there is provided a method of rapidly prototyping software embedded in a microprocessor, characterized in that the method includes the steps of:
(a) presenting a software program in executable form and having a plurality of machine instructions of a finite quantity of fixed lengths;
(b) defining a replacement instruction for at least one machine instruction of the plurality of instructions; and
(c) replacing the at least one machine instruction in the executable form of the software program with the replacement instruction.

The invention is of advantage in that it is capable of addressing at least one of the objects of the invention.

Preferably, in the method, the replacement instruction is further defined as a branch instruction that references an address outside an address space for the software program.

Preferably, in the method, the step (c) of replacing the at least one machine instruction further comprises determining location information for the at least one machine instruction within the software program. More preferably, in the method, the step of determining location information further comprises identifying an address for the at least one machine instruction using object files from which the software program was created. Yet more preferably, in the method, the step of replacing the at least one machine instruction further comprises inserting the replacement instruction into a program memory image of the software program at said address.

Preferably, the method further comprises the steps of:
(d) identifying a function in the software program, the function having at least one output variable;
(e) determining location information for each machine instruction that accesses the at least one output variable; and
(f) replacing each machine instruction that accesses the at least one output variable with a branch instruction using the location information for the applicable machine instruction, where the branch instruction references a set of relocation instructions residing outside of an address space for the software program.

Preferably, the method further comprises the step of executing the executable form of the software program having the replacement instruction.

Preferably, the method is applicable to rapidly prototyping software for use in embedded microcontrollers for automotive use.

According to a second aspect of the present invention, there is provided a computer-implemented system for prototyping application software embedded in a microprocessor, characterized in that the system comprises:
(a) an instruction locator adapted to receive a specified machine instruction within an software program and operable to identify location information for the specified machine instruction in an executable form of the software program;
(b) an instruction replacement component in data communication with the instruction locator, the instruction replacement component adapted to receive a replacement instruction and operable to replace the specified machine instruction in the executable form of the software program with the replacement instruction; and
(c) an execution component in data communication with the instruction replacement component and operable to execute the executable form of the software program having the replacement instruction.

Preferably, in the system, the executable form of the software program includes a plurality of machine instructions of one or more fixed lengths.

Preferably, in the system, the instruction locator is operable to identify an address for the specified machine instruction using object files from which the software program was created. More preferably, in the system, the instruction replacement component is operable to insert the replacement instruction into a program memory image of the software program at said address.

Preferably, in the system, the replacement instruction is further defined as a branch instruction that references an address outside an address space for the software program.

Preferably, in the system, the instruction replacement component is operable to generate a set of relocation instructions, such that the replacement instructions passes processing control to the set of relocation instructions. More preferably, in the system, the instruction replacement component is further operable to insert the set of relocation instructions in a memory space of the microprocessor that resides outside of an address space of the software program. More preferably, in the system, the instruction replacement component is further operable to insert the set of relocation instructions in a memory space outside of the microprocessor. More preferably, in the system, the plurality of machine instructions define at least one function having at least one output variable, the instruction locator being operable to determine location information for each machine instruction that accesses the at least one output variable and the instruction replacement component being operable to replace each machine instruction that accesses the at least one output variable with the replacement instruction.

Preferably, the system is adapted for prototyping application software embedded in a microprocessor suitable for automotive use.

For a more complete understanding of the invention, its objects and advantages, reference may be made to the following specification and to its accompanying drawings.

### Brief description of the drawings

Embodiments of the invention will now be described, by way of example only, with reference to the following diagrams wherein:
Figure 1 is a diagram depicting an exemplary software prototyping environment;
Figure 2 is a flowchart illustrating a method of prototyping software embedded in a microprocessor without modifications to corresponding underlying source code in accordance with the present invention;
Figure 3A is a diagram illustrating an unmodified program memory image for a target software program embedded in a microprocessor;
Figure 3B is a diagram illustrating a program memory image modified in accordance with the present invention;
Figures 4A and 4B are flowcharts illustrating exemplary embodiments of relocation code in accordance with the present invention; and
Figure 5 is a diagram depicting an exemplary embodiment of a prototype tool configured to support the present invention.

### Detailed description of the preferred embodiments

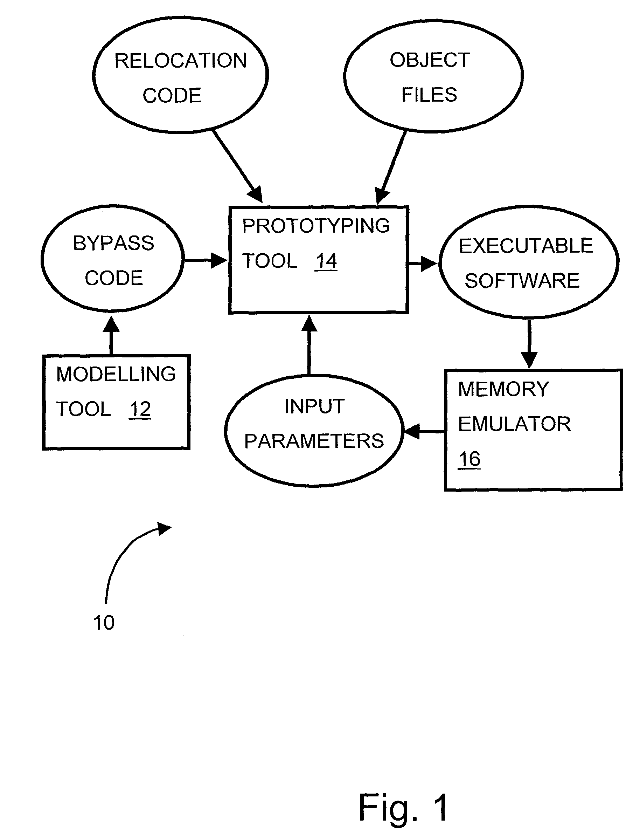

An exemplary software prototyping environment is depicted in Figure 1 and indicated generally by 10. The prototyping environment 10 is configured to design and test software-implemented control algorithms susceptible to being embedded in an automotive electronic control unit. While the following description is provided with reference to control algorithms embedded in an automotive electronic control unit, it is readily understood that broader aspects of the present invention are applicable to other types of software applications which are embedded in microprocessors.

The prototyping environment 10 generally comprises a modelling tool 12, a prototyping tool 14, and, optionally, a memory emulator 16. The modelling tool 12 is an interactive tool for modelling, simulating and analyzing dynamic systems. For instance, the modelling tool 12 allows users to generate models which represent control algorithms. In an exemplary embodiment, the modelling tool 12 is susceptible to being implemented using the Simulink modelling tool commercially available from MathWorks, Inc.

The prototyping tool 14 thereby enables users to connect simulation models to physical systems and execute them in real time on a microprocessor or other PC-compatible hardware. In particular, the prototyping tool 14 is operable to generate executable software based on the user-defined simulation models. An exemplary prototyping tool is a proprietary xPC Target system which is also commercially available from MathWorks, Inc. In order to access variables within a control algorithm embedded in a read-only memory space, it is envisioned that the prototyping environment 10 optionally employs a memory emulator 16. A suitable memory emulator is a proprietary M5 memory emulator commercially available from Accurate Technologies, Inc.

To prototype control algorithms without requiring to modify corresponding underlying source code, the software prototyping environment 10 is arranged to support three principal requirements.

As a first principal requirement, bypass code must have access to input parameters that reside in a target software application; "bypass code" is understood to be executable software that defines one or more substitute or additional functions of the target software. It is readily appreciated that the bypass code may either be executed at a different location on the same processor that supports the target software or on a different processor.

When the bypass code is to be executed on the same processor as the target software, the bypass code may access the input parameters (as global variables) in the same memory space as is accessed by the target software. Conversely, when the bypass code is to be executed on a different processor than the target software, the bypass code may gain access to the input parameters through the use of a memory emulator. For automotive electronic control units that support memory emulation, random access memory variables are susceptible to being accessed through common shadow table mechanisms as is well known in the art. In either case, the bypass code has access to input parameters associated with the target software.

As a second principal requirement, the prototyping environment 10 must provide a method for the bypass code to write its output parameters to the target software as well as to provide a method of synchronizing execution of the bypass software with the target software. Modifying a program memory image at a machine code level is one approach to meeting these two remaining requirements.

In many conventional microprocessors, machine instructions are limited to a finite quantity of fixed lengths. For example, machine instructions in a RISC-based processor are 32 bits in length; whereas Tri-Core and ST10 processors have machine instructions that are 16 bits and 32 bits in length. Thus, some machine instructions in the underlying software may be replaced with other machine instructions. Although this concept serves as the basis for the present invention, it is readily understood that the broader aspects of the present invention may be extended to microprocessors having machine instructions of a varied length.

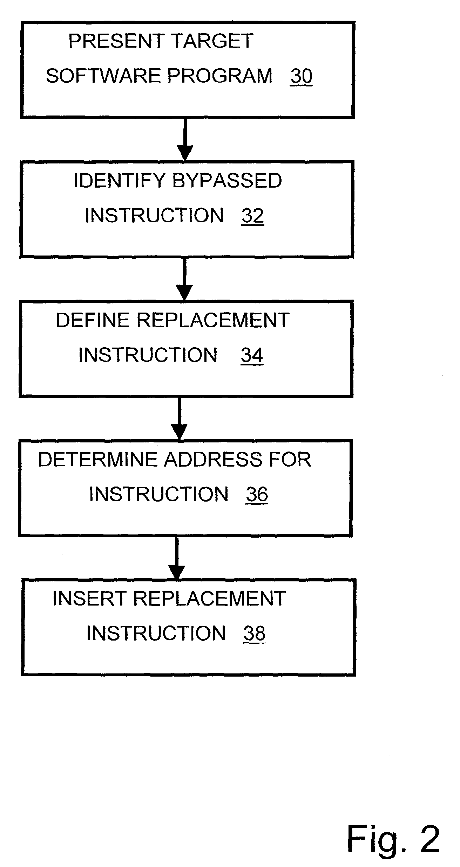

In accordance with the present invention, there is therefore provided a method of prototyping software embedded in a microprocessor without modifications to underlying source code corresponding to the software. Referring to Figure 2, the target software program is provided at a step 30 in an executable form which is defined by a plurality of machine instructions of a finite quantity of fixed lengths. A replacement instruction is defined at a step 34 for substituting for at least one of the machine instructions in the target software program.

Next, one or more machine instructions of the target software program are replaced with replacement instructions. To do so, a memory address is determined for each machine instruction which is to be replaced in the software program at a step 36. The memory address for a given machine instruction may be determined from a set of object files from which the software program was built as is well known in the art. The replacement instruction is then inserted at the step 36 into a program memory image of the software program at the identified address.

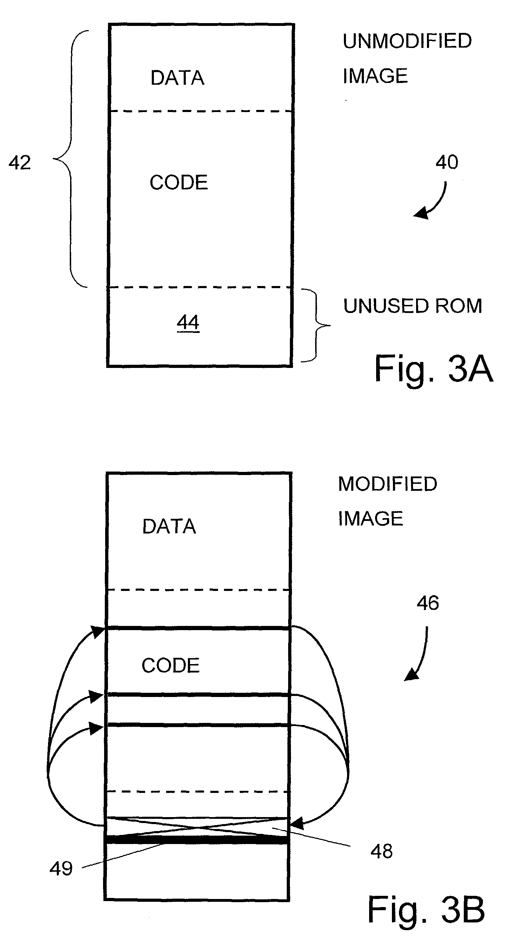

A preferred embodiment of the present invention is further described below. In Figure 3A, there is illustrated an unmodified program memory image 40 for a target software program embedded in a microprocessor and stored in its memory space. The memory space may be partitioned into an address space 42 for the target software program and an unused portion 44 of memory space. It is readily understood that the address space 42 for the target software program may be further partitioned into a data portion and a code portion.

In Figure 3B, there is illustrated a program memory image modified in accordance with the present invention. One or more machine instructions 46 (also referred to as "bypassed instructions") may be replaced with replacement instructions. In a preferred embodiment of the present invention, the bypassed instructions are preferably machine instructions that access or modify variables that correspond to the output parameters of the bypass code. For instance, since there are no machine instructions that directly modify the memory space of a RISC-based processor, the code must load the value of a variable into a register, modify the value (for example, by way of a math operation), and then store the modified value back into its appropriate memory space. Thus, in a RISC-based processor, the bypassed instructions are specifically designated as load and/or store instructions for the applicable variables in the target software. However, it is readily understood that other types of machine instructions may also serve as bypass instructions.

As a third principal requirement, each replacement instruction is preferably defined as a branch instruction that references an address outside the address space for the target software program. In one exemplary embodiment, branch instructions pass processing control to a series of machine instructions that are defined in the unused portion 44 of the memory space and are referred to herein as relocation code 48. Relocation code 48 is responsible for variable relocation and task synchronization functions as will be further described below. Bypass code 49 is also susceptible to being defined in the unused portion 44 of the memory space.

Alternatively, it is envisaged that replacement instructions are susceptible to being defined as instructions that cause an interrupt or an exception to occur in the microprocessor. For example, RISC-based processors provide a "sc" command to perform such a function; whereas ST10-based processors provide a "trap" instruction to perform this function. Although these types of instructions provide an alternative technique for branching to a different address space, such an approach is generally not preferred because these types of instructions may interfere with the normal operation of the microprocessor.

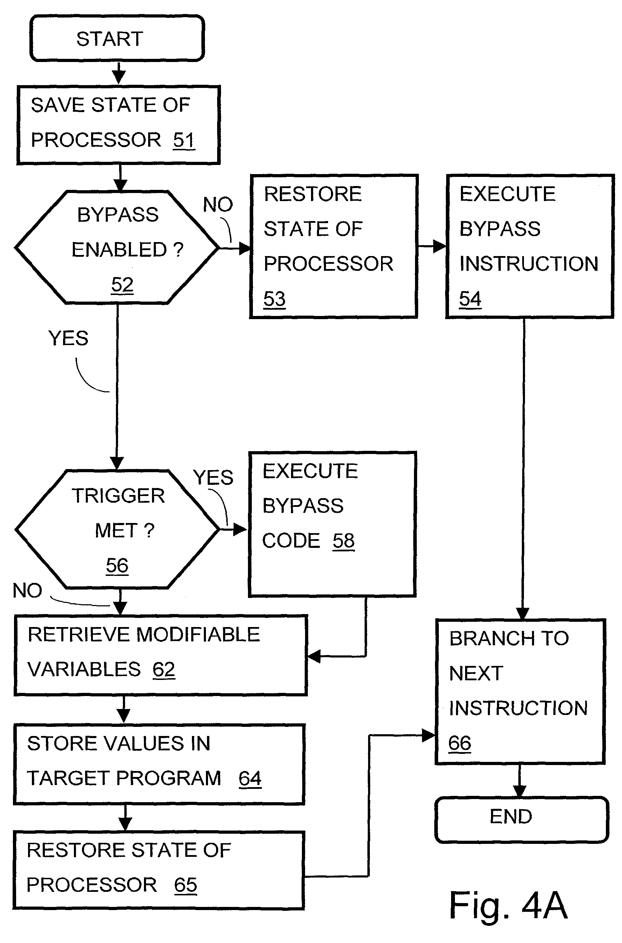

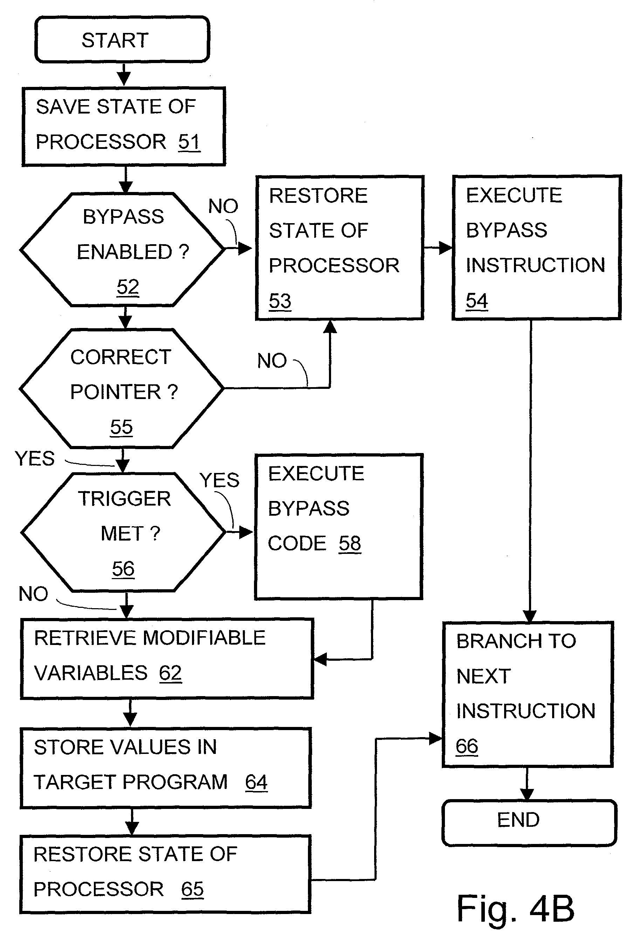

In Figures 4A and 4B, there are shown flowcharts that illustrate exemplary embodiments of relocation code in accordance with the present invention. In general, the relocation code performs four primary functions. Referring to Figure 4A, the relocation code initially determines if the bypass feature is enabled or disabled as shown in a step 52. When the bypass feature is disabled, the relocation code 48 executes the bypassed instruction as shown at a step 54; otherwise, processing continues to the machine instruction following the bypass instruction in the target software program.

On the other hand, when the bypass function is enabled, the relocation code 48 performs the remaining functions. First, the relation code 48 determines if conditions are met to trigger execution of the bypass code at a step 56. If so, the bypass code is executed as shown at a step 58. In one exemplary embodiment, the bypass code may be triggered each time a write (or store) instruction is performed for a given output parameter. Alternatively, the bypass code may be triggered upon a call to an externally linked (global) function. It is readily understood that other techniques for triggering the bypass code are within the scope of the present invention.

Next, the relocation code synchronizes the values of the output parameters which may be modified by the bypass code. For each modifiable output parameter, the corresponding value as maintained by the bypass code is retrieved at a step 62 and then stored at a step 64 at its corresponding address within the address space of the target software program. In this way, the value of each output parameter in the target software program matches the value of the corresponding output parameter as established by the bypass code. It should be noted that this synchronization process occurs regardless of whether or not the bypass code is executed by the relocation code 48.

Lastly, the relocation code 48 branches processing at a step 66 to the machine instruction following the bypassed instruction in the target software program. The relocation code 48 described above assumes a direct addressing method of storing variable values. In other words, each machine instruction that manipulates the value of a variable contains the address information needed to access that variable in memory.

In some instances, an indirect addressing method may be employed for storing variable values. Indirect addressing first loads the address of a variable into a machine register, and then uses the register to load or store the value of the variable. Thus, it is not possible to directly determine which store instructions are associated with a given variable. For these types of instructions, the present invention determines the machine register used as the pointer to the variable and then searches, starting from the specified instruction, for all store instructions using that register. The search includes all instructions in the current function (or routine) as well as all functions that may be called by the function. In this way, all instructions that have the possibility of being store-type instructions to the given variable are modified. With this method, it is possible to modify a store instruction that is not associated with the given variable.

Relocation code for an indirect addressing method of storing variable values is shown in Figure 4B. In this case, it is necessary for the relocation code 48 to determine that the value of the register is in fact pointing to the given variable a shown at a step 55; otherwise, the relocation code is in a manner as set forth in relation to Figure 4A.

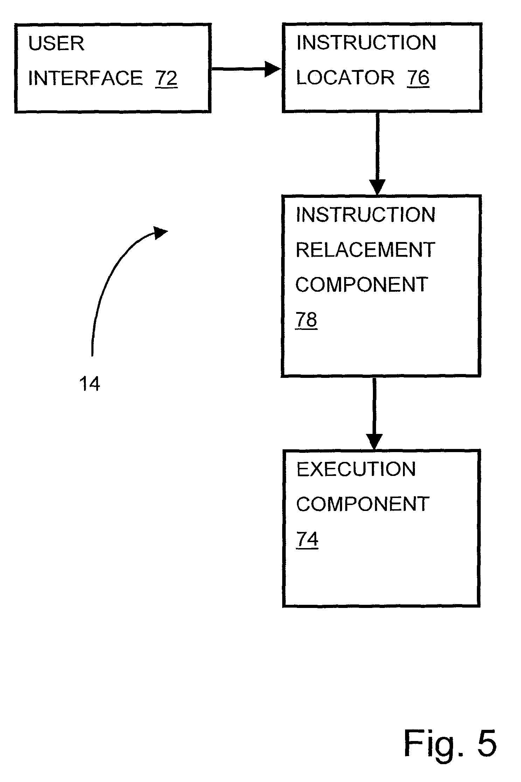

Conventional prototyping tools may be configured to support the present invention. Referring to Figure 5, a conventional prototyping tool 14 typically includes a user interface 72 and an execution component 74. In accordance with the present invention, the prototyping tool 14 may be further configured to include an instruction locator 76 and an instruction replacement component 78.

A user configures prototyping equipment through the use of the user interface 72. In general, the user interface may be used to specify the target software program and the applicable bypass code. Specifically, the user may further specify machine instructions which are to be bypassed and corresponding replacement instructions. Alternatively, it is envisioned that the user may merely specify inputs and outputs for the bypass code as well as trigger conditions for executing the bypass code. In this case, the prototyping tool will generate the required replacements instructions as well as the relocation code as described in the foregoing. In either case, it will be appreciated to one skilled in the art that a suitable user interface may be designed to support these required functions of the present invention.

In operation, the instruction locator 76 is adapted to receive a specified machine instruction within a target software program and is operable to identify location information for the specified machine instruction within the executable form of the target software program. In one exemplary embodiment, the instruction locator 76 searches through the application image (namely a hex record) for the target software and parses each machine instruction therein. For Embedded Application Binary Interface (EABI) compliant compilers, load and store instructions can be identified in the application image. In RISC-based processors, running software that is EABI compliant, registers must be used in specific ways. For example, a register R13 in such RISC-based processors must be used to point to the small data area for read/write memory. This register R13 normally is used to index to the internal random access memory of the processor. Using this specific information, the instruction locator has the ability to reverse calculate an address for any load or store instruction in the small data area. It is readily understood that other techniques for identifying location information for a specific machine instruction are within the broader aspects of the present invention.

The instruction replacement component 78 is then operable to replace the specified machine instruction with a replacement instruction. To do so, the instruction replace component 78 is adapted to receive the replacement instruction and then to insert the replacement instruction into a program memory image of the software program at the identified address. In one exemplary embodiment, the instruction replacement component 78 generates the applicable relocation code. When the bypass code is to be executed on the same processor as the target software, the instruction replacement component 78 also inserts the relocation code and bypass code into an unused portion of the memory space on the target processor.

Lastly, the execution component 74 is operable to execute the executable form of the software program that includes the replacement instructions. It is to be understood that only the relevant steps of the process are discussed herein, but that other software-implemented features may be needed to manage and control the overall prototyping environment.

While the invention has been described in its presently preferred form, it will be understood that the invention is capable of modification without departing from the spirit of the invention as set forth in the appended claims.

Expressions such as "include", "comprise", "incorporate", "contain" employed to describe embodiments of the invention and to claim the present invention are intended to be construed in a non-exclusive manner, namely allowing for additional unspecified items to be also present.

## Claims

1. A method of rapidly prototyping software embedded in a microprocessor (46), **characterized in that** the method includes the steps of:
(a) presenting a software program (42) in executable form and having a plurality of machine instructions of a finite quantity of fixed lengths;
(b) defining a replacement instruction (48, 49) for at least one machine instruction of the plurality of instructions; and
(c) replacing the at least one machine instruction in the executable form of the software program (42) with the replacement instruction (48, 49).

2. A method according to Claim 1, wherein the replacement instruction (48, 49) is further defined as a branch instruction that references an address (44) outside an address space (42) for the software program.

3. A method according to Claim 1, wherein the step (c) of replacing the at least one machine instruction further comprises determining location information for the at least one machine instruction within the software program.

4. A method according to Claim 3, wherein the step of determining location information further comprises identifying an address for the at least one machine instruction using object files from which the software program was created.

5. A method according to Claim 4, wherein the step of replacing the at least one machine instruction further comprises inserting the replacement instruction into a program memory image of the software program at said address.

6. A method according to Claim 1 further comprising the steps of:
(d) identifying a function in the software program, the function having at least one output variable;
(e) determining location information for each machine instruction that accesses the at least one output variable; and
(f) replacing each machine instruction that accesses the at least one output variable with a branch instruction using the location information for the applicable machine instruction, where the branch instruction references a set of relocation instructions residing outside of an address space for the software program.

7. A method according to Claim 1, further comprising the step of executing the executable form of the software program having the replacement instruction.

8. A method according to any one of the preceding claims, applicable to rapidly prototyping software for use in embedded microcontrollers for automotive use.

9. A computer-implemented system (10) for prototyping application software embedded in a microprocessor (46), **characterized in that** the system (10) comprises:
(a) an instruction locator adapted to receive a specified machine instruction within an software program and operable to identify location information for the specified machine instruction in an executable form of the software program;
(b) an instruction replacement component in data communication with the instruction locator, the instruction replacement component adapted to receive a replacement instruction and operable to replace the specified machine instruction in the executable form of the software program with the replacement instruction; and
(c) an execution component in data communication with the instruction replacement component and operable to execute the executable form of the software program having the replacement instruction.

10. A computer-implemented system according to Claim 9, wherein the executable form of the software program includes a plurality of machine instructions of one or more fixed lengths.

11. A computer-implemented system according to Claim 9, wherein the instruction locator is operable to identify an address for the specified machine instruction using object files from which the software program was created.

12. A computer-implemented system according to Claim 11, wherein the instruction replacement component is operable to insert the replacement instruction into a program memory image of the software program at said address.

13. A computer-implemented system according to Claim 9, wherein the replacement instruction is further defined as a branch instruction that references an address outside an address space for the software program.

14. A computer-implemented system of Claim 9, wherein the instruction replacement component is operable to generate a set of relocation instructions, such that the replacement instructions passes processing control to the set of relocation instructions.

15. A computer-implemented system according to Claim 14, wherein the instruction replacement component is further operable to insert the set of relocation instructions in a memory space of the microprocessor that resides outside of an address space of the software program.

16. A computer-implemented system according to Claim 14, wherein the instruction replacement component is further operable to insert the set of relocation instructions in a memory space outside of the microprocessor.

17. A computer-implemented system according to Claim 14, wherein the plurality of machine instructions define at least one function having at least one output variable, the instruction locator being operable to determine location information for each machine instruction that accesses the at least one output variable and the instruction replacement component being operable to replace each machine instruction that accesses the at least one output variable with the replacement instruction.

18. A computer-implemented system for prototyping application software embedded in a microprocessor (46) suitable for automotive use.
